# EUROPÄISCHE PATENTSCHRIFT

(11) **EP 1 571 061 B1**
(45) Veröffentlichungstag und Bekanntmachung des Hinweises auf die Patenterteilung: **27.12.2006**
(21) Anmeldenummer: 04029284.9
(22) Anmeldetag: 10.12.2004
(51) Int. Cl.: B60T 13/68, B60T 7/10, B60T 8/32

(54) **Elektrisch gesteuerte pneumatische Bremsanlage für ein Fahrzeug**
Electrically controlled pneumatic braking system for a vehicle
Système de freinage pneumatique à commande électrique pour un véhicule

(30) Priorität: 05.03.2004 DE 102004010743
(43) Veröffentlichungstag der Anmeldung: 07.09.2005
(73) Patentinhaber: WABCO GmbH, 30453 Hannover (DE)
(72) Erfinder: Bensch, Uwe, 30161 Hannover (DE); Förster, Henning, 31171 Nordstemmen (DE); Kiel, Bernd, 31515 Wunstorf (DE); Menze, Wilfried, 31832 Springe (DE); Rosendahl, Hartmut, 30167 Hannover (DE); Struwe, Otmar, 30163 Hannover (DE)
(74) Vertreter: Günther, Constantin

(56) Entgegenhaltungen:
- WO-A-00/23740
- WO-A-95/16594
- WO-A-99/39951
- WO-A-99/65746
- DE-C1- 10 006 656
- DE-C1- 19 953 805
- FR-A- 2 830 826

## Beschreibung

Die Erfindung betrifft eine elektrisch gesteuerte pneumatische Bremsanlage für ein Fahrzeug gemäß dem Oberbegriff des Patentanspruchs 1.

Eine gattungsgemäße Bremsanlage ist aus der DE 199 53 805 C1 bekannt.

Bei der bekannten Bremsanlage wird ein kombinierter Betriebs- und Federspeicherbremszylinder verwendet, welcher für die Betriebsbremsfunktion elektrisch betätigbar und für die Federspeicher-Bremsfunktion über den Federspeicherteil pneumatisch betätigbar ist. Die pneumatische Betätigung dient dort als Redundanzebene, z. B. für den Ausfall der elektrischen Steuerung. In einem solchen Redundanzfall kann durch Entlüften des Federspeicherteils der Bremszylinder automatisch eine Notbremsung eingeleitet werden oder zusätzlich manuell über einen Feststellhebel ausgelöst werden. Diese Notbremsung erfolgt mit maximaler Bremswirkung der Federspeicherbremszylinder, was relativ unkomfortabel ist und außerdem zu einer Behinderung des nachfolgenden Straßenverkehrs führen kann.

Der Erfindung liegt daher die Aufgabe zugrunde, eine elektrisch gesteuerte pneumatische Bremsanlage für ein Fahrzeug anzugeben, welche im Redundanzfall einen höheren Bedienkomfort und eine größere Sicherheit für den Straßenverkehr ermöglicht.

Diese Aufgabe wird durch die in dem Patentanspruch 1 angegebene Erfindung gelöst. Weiterbildungen und vorteilhafte Ausgestaltungen der Erfindung sind in den Unteransprüchen angegeben.

Die Erfindung hat den Vorteil, auch im Redundanzfall dem Fahrzeugbediener eine normal, d.h. über das Bremspedal, bedienbare Bremsanlage zur Verfügung zu stellen, über die das Fahrzeug abstufbar abbremsbar ist, wenn auch mit geringerer Bremswirkung als im ungestörten Normalfall. Beispiele für den Redundanzfall sind etwa auf der elektrischen Seite ein Ausfall der Stromversorgung für die elektrische Steuerung, ein Ausfall der gesamten elektrischen Steuerung der Bremsanlage oder ein Ausfall einzelner Elektronik-Module, und auf der Druckluftseite z. B. ein pneumatischer Ausfall des Hinterachsbremskreises der Bremsanlage.

Unter Nennung weiterer Vorteile wird die Erfindung nachfolgend anhand von Ausführungsbeispielen unter Verwendung von Zeichnungen näher erläutert.

Es zeigen
- Fig. 1: eine Druckluftbremsanlage in schematischer Darstellung und
- Fig. 2: ein in der Druckluftbremsanlage gemäß Fig. 1 vorgesehenes Feststellbrems-Modul.

In den Figuren werden gleiche Bezugszeichen für einander entsprechende Teile verwendet.

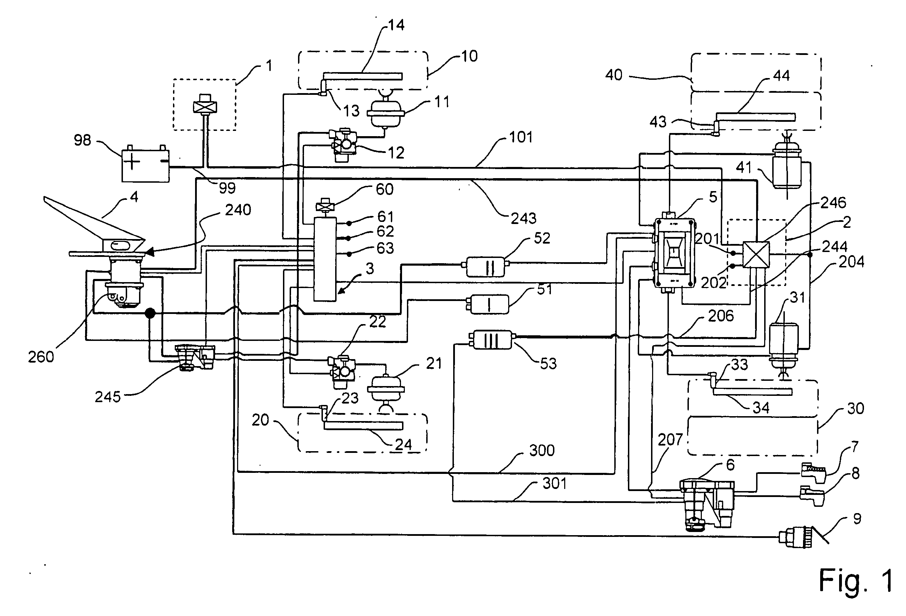

In der Fig. 1 ist eine Druckluft-Bremsanlage für ein vierrädriges Fahrzeug schematisch dargestellt. Bei der dargestellten Bremsanlage handelt es sich um einen elektrisch gesteuerten Typ, d. h. die Bremsdruckzumessung der einzelnen Radbremsen wird durch elektrische und elektronische Steuerelemente gesteuert.

Das Fahrzeug gemäß Fig. 1 weist vier Räder (10, 20, 30, 40) auf, die zur individuellen Abbremsung jeweils mit einer Radbremse versehen sind. Die Räder (10, 20), nachfolgend auch als Vorderräder bezeichnet, sind der Vorderachse des Fahrzeuges zugeordnet. Die Räder (30, 40), nachfolgend auch als Hinterräder bezeichnet, sind der Hinterachse des Fahrzeuges zugeordnet. Von den Radbremsen sind zur vereinfachten Darstellung in der Fig. 1 nur die jeweiligen Druckluft-Bremszylinder (11, 21, 31, 41) dargestellt. Den Bremszylindern (11, 21, 31, 41) sind jeweils elektromagnetisch betätigbare Ventile zur Beeinflussung des Bremsdrucks vorgeschaltet. Im Falle der Vorderräder (10, 20) werden hierfür die Ventile (12, 22) verwendet. Für die Hinterräder (30, 40) sind die jeweiligen Ventile in ein Hinterachs-Bremssteuermodul (5) integriert.

Des weiteren sind an den Rädern (10, 20, 30, 40) jeweils Geschwindigkeits-Sensiermittel angeordnet, welche eine Ermittlung der jeweiligen Raddrehgeschwindigkeit erlauben. Die Geschwindigkeits-Sensiermittel bestehen jeweils aus einem mit dem Rad (10, 20, 30, 40) drehfest verbundenen Polrad (14, 24, 34, 44), welches mit einem induktiv arbeitenden Rad-Sensor (13, 23, 33, 43) elektromagnetisch gekoppelt ist.

Des weiteren ist ein Bremswertgeber (240) vorgesehen, der zur Erfassung des Bremswunsches des Fahrers des Fahrzeuges dient und der einen elektrischen Teil und einen pneumatischen Teil aufweist. Der pneumatische Teil wird von einem ersten (51) und einem zweiten (52) Druckluftvorratsbehälter mit Druckluft versorgt. Der pneumatische Teil weist ein zweikreisig ausgeführtes Bremsventil (260) auf, das mechanisch mit dem Bremspedal (4) verbunden ist und darüber betätigbar ist. Die Funktion des Bremsventils (260) entspricht derjenigen von konventionellen rein pneumatisch gesteuerten Bremsanlagen. Ein von dem Bremsventil (260) bei Betätigung des Bremspedals (4) abgegebenes Drucksignal wird über eine Druckluftleitung (243) einem noch zu erläuternden Feststellbrems-Modul (2) zugeführt. Ein hiervon entkoppeltes zweites Drucksignal wird einem Vorderachs-Redundanzventil (245) zugeführt.

Das Vorderachs-Redundanzventil (245) ist zur Druckluftversorgung über eine Druckluftleitung mit dem zweiten Druckluftvorratsbehälter (52) sowie, wie erwähnt, mit dem Bremswertgeber (240) verbunden. Das Vorderachs-Redundanzventil (245) ist außerdem über eine elektrische Leitung von einem Vorderachs-Bremssteuermodul (3) bezüglich der Druckluftversorgung zwischen dem zweiten Druckluftvorratsbehälter (52) und dem Drucksignal des Bremswertgebers (240) umschaltbar. Im Redundanzfall erfolgt eine Umschaltung auf das Drucksignal des Bremswertgebers (240). Das Vorderachs-Redundanzventil (245) leitet die Druckluft zu den Ventilen (12, 22).

Die Rad-Sensoren (13, 23) sowie die Ventile (12, 22) der Vorderräder (10, 20) sind über elektrische Leitungen mit dem Vorderachs-Bremssteuermodul (3) verbunden. Das Vorderachs-Bremssteuermodul (3) dient zur Steuerung der Radbremsen der Vorderräder (10, 20), konkreter gesagt zur Bremsdruckzumessung für die Bremszylinder (11, 21), in Abhängigkeit von einer Bremsbetätigung des Fahrers des Fahrzeuges sowie weiterer Betriebsbedingungen des Fahrzeuges, wie etwa Bremsschlupf oder Bremsbelagverschleiß.

Das Vorderachs-Bremssteuermodul (3) ist hierfür über eine elektrische Leitung mit dem elektrischen Teil des Bremswertgebers (240) verbunden. Der Bremswertgeber (240) umfasst einen elektrischen Sensor, der eine mechanische Betätigung eines Bremspedals (4) erfasst und ein diese Betätigung repräsentierendes Signal an eine in dem Vorderachs-Bremssteuermodul (3) angeordnete elektronische Steuereinrichtung abgibt. Die elektronische Steuereinrichtung bestimmt unter Auswertung dieser empfangenen Signale sowie unter Berücksichtigung von weiteren, z. B. aus den Signalen der Rad-Sensoren (13, 23, 33, 43) abgeleiteten Größen, wie Blockiergefahr, Bremsbelagverschleiß, achslast-abhängiger Bremskraftverteilung, den in den Bremszylindern (11, 21) einzustellenden Bremsdruck und bewirkt die Einstellung des Bremsdrucks durch Betätigung der Ventile (12, 22).

Das Vorderachs-Bremssteuermodul (3) weist zudem als manuelles Bedienelement einen Rollbrems-Signalgeber (60), einen Stromversorgungsanschluss (61), eine Datenschnittstellen-Anschluss (62) sowie einen Serviceanschluss (63) auf.

Das Hinterachs-Bremssteuermodul (5) weist einen ähnlichen Aufbau wie das Vorderachs-Bremssteuermodul (3) auf. Das Hinterachs-Bremssteuermodul (5) ist über eine pneumatische Leitung mit dem zweiten Druckluftvorratsbehälter (52) verbunden. Das Hinterachs-Bremssteuermodul (5) weist ebenfalls eine Datenschnittstelle auf, die über eine elektrische Leitung (300) mit einer weiteren Datenschnittstelle des Vorderachs-Bremssteuermoduls (3) verbunden ist. Über die Datenschnittstellen tauschen die Module (3, 5) Daten aus. So empfängt das Hinterachs-Bremssteuermodul (5) von dem Vorderachs-Bremssteuermodul (3) beispielsweise den mittels des Bremswertgebers erfassten Bremswunsch des Fahrers und steuert analog wie das Vorderachs-Bremssteuermodul (3) den Bremsdruck in den Bremszylindern (31, 41) der Hinterräder (30, 40) über in dem Hinterachs-Bremssteuermodul (5) angeordnete Ventile gemäß vorgegebenen Algorithmen. Die hierfür erforderliche Druckluft entnimmt das Hinterachs-Bremssteuermodul (5) dem zweiten Druckluftvorratsbehälter (52).

Die Bremszylinder (31, 41) sind als kombinierte Federspeicher-/Membranzylinder ausgebildet. Das bedeutet, dass die Bremszylinder (31, 41) neben der Funktion von Membranzylindern, wie etwa der Bremszylinder (11, 21), zusätzlich eine Federspeicherfunktion aufweisen. Die Bremszylinder (31, 41) bestehen aus einem Membranteil, welcher pneumatisch mit der Betriebsbremsanlage der Hinterachse verbunden ist und mit dem eigentlichen Bremsdruck beaufschlagbar ist, sowie aus einem Federspeicherteil, welcher pneumatisch von dem Membranteil getrennt ist und über gesonderte Druckluftleitungen mit Druckluft beaufschlagbar ist. Der Federspeicherteil wird üblicherweise der Feststellbremsanlage des Fahrzeuges zugerechnet. Der Federspeicherteil beinhaltet die Federspeicherfunktion, welche bei Druckluftbeaufschlagung des Federspeicherteils eine Speicherfeder vorspannt und dabei eine Bremswirkung der Federspeicherfunktion verringert, während bei Entlüftung des Federspeicherteils die Speicherfeder sich entspannt und dabei eine Bremswirkung im Rahmen der Federspeicherfunktion auf die mit dem jeweiligen Bremszylinder verbundene Bremse ausübt. Bremszylinder dieses Typs werden nachfolgend auch als Federspeicher-Bremszylinder bezeichnet.

Mittels solcher Federspeicher-Bremszylinder ist eine Feststellbrems-Funktion möglich, die auch bei Fehlen von Druckluft eine Bremsung bzw. ein Feststellen des Fahrzeuges ermöglicht. Diese Feststellbrems-Funktion tritt, wie erwähnt, bei einem Entlüften des Federspeicherteils des Bremszylinders (31, 41) unterhalb eines Mindestdruckwerts auf. Zur separaten, von der Betätigung des Bremspedals (4) unabhängigen Aktivierung der Feststellbrems-Funktion ist der Druckluftanschluß des Federspeicherteils bei bekannten Druckluft-Bremsanlagen mit einem pneumatischen Handbremsventil verbunden.

Im Unterschied hierzu ist bei der Bremsanlage gemäß Fig. 1 an die erwähnten Druckluftanschlüsse des Federspeicherteils der Bremszylinder (31, 41) über Druckluftleitungen (204) ein Feststellbrems-Modul (2) angeschlossen, welches eine Drucksteuerung an diesen weiteren Druckluftanschlüssen mit Hilfe elektronischer Steuerungsmittel erlaubt.

Das Feststellbrems-Modul (2) ist über eine mehradrige elektrische Leitung (101) mit einem manuellen Bedienelement, dem Feststellbrems-Signalgeber (1), verbunden. Der Feststellbrems-Signalgeber (1) wird ebenso wie die übrigen elektrischen Einrichtungen in dem Fahrzeug von einer Stromversorgungseinrichtung (98), z. B. einer Fahrzeugbatterie, über eine mehradrige elektrische Leitung (99) mit elektrischer Energie versorgt. Des weiteren ist das Feststellbrems-Modul (2) zur Druckluftversorgung über eine Druckluftleitung (206) mit einem dritten Druckluftvorratsbehälter (53) verbunden. Außerdem weist das Feststellbrems-Modul (2) einen Eingangsanschluss (246) für das über die Druckluftleitung (243) zugeführte Drucksignal auf.

Des weiteren weist das Feststellbrems-Modul (2) Anschlüsse (201, 202) für die Spannungsversorgung und die Datenschnittstelle auf. Der Anschluss (201) für die Datenschnittstelle dient zur Verbindung mit einem in dem Fahrzeug vorgesehenen Datenbus-System, welches auch als Fahrzeugbus bezeichnet wird. Der Fahrzeugbus dient zum Datenaustausch zwischen verschiedenen in dem Fahrzeug vorgesehenen, eine elektronische Steuerung enthaltenden Geräten, wie z. B. den Moduln (3, 5). Hierfür sind die Module (3, 5) über jeweilige Datenschnittstellen-Anschlüsse mit dem Fahrzeugbus verbunden.

Das bisher beschriebene Fahrzeug ist außerdem zur Ankopplung eines Anhängefahrzeuges geeignet. In diesem Zusammenhang wird das bisher beschriebene Fahrzeug auch als Zugfahrzeug und die Einheit aus Zugfahrzeug und Anhängefahrzeug auch als Fahrzeugzug bezeichnet.

Die Bremsanlage gemäß Fig. 1 enthält außerdem ein Anhängersteuerventil (6), welches zur Bremsdrucksteuerung eines ankoppelbaren Anhängefahrzeuges dient. Das Anhängersteuerventil (6) ist zur Druckluftversorgung über eine Druckluftleitung (301) mit dem dritten Druckluftvorratsbehälter (53) verbunden. Das Anhängersteuerventil (6) gibt die von dem Druckluftvorratsbehälter (53) bezogene Druckluft nach Maßgabe von elektrischen und pneumatischen Steuersignalen gestuft über einen Druckluftanschluß (8) an die Bremsanlage eines angekoppelten Anhängefahrzeuges ab. Zur Steuerung dieser Druckabgabe weist das Anhängersteuerventil (6) einen elektrischen Signaleingang auf, der mit dem Hinterachs-Bremssteuermodul (5) verbunden ist und über den das Anhängersteuerventil (6) ein elektrisches Signal empfängt, das den Bremswunsch des Fahrers repräsentiert. Alternativ kann der elektrische Signaleingang auch an das Vorderachs-Bremssteuermodul (3) angeschlossen sein. Zusätzlich zu dem elektrischen Signaleingang ist ein Drucksteuereingang zum Empfang von pneumatischen Steuersignalen vorgesehen. Der Drucksteuereingang ist über eine Druckluftleitung (207) mit dem Feststellbrems-Modul (2) verbunden.

Des weiteren ist noch ein elektrischer Steckanschluss (9) zur Stromversorgung und zur Übermittlung von Datensignalen für das Anhängefahrzeug vorgesehen. Weiterhin ist ein Versorgungsanschluß (7) zur Versorgung des Anhängefahrzeuges mit Vorratsdruck vorgesehen.

Die Druckluftvorratsbehälter (51, 52, 53) sind über eine nicht dargestellte Druckluftversorgungsanlage, z. B. einen von dem Fahrzeugmotor angetriebenen Kompressor, mit Druckluft befüllbar.

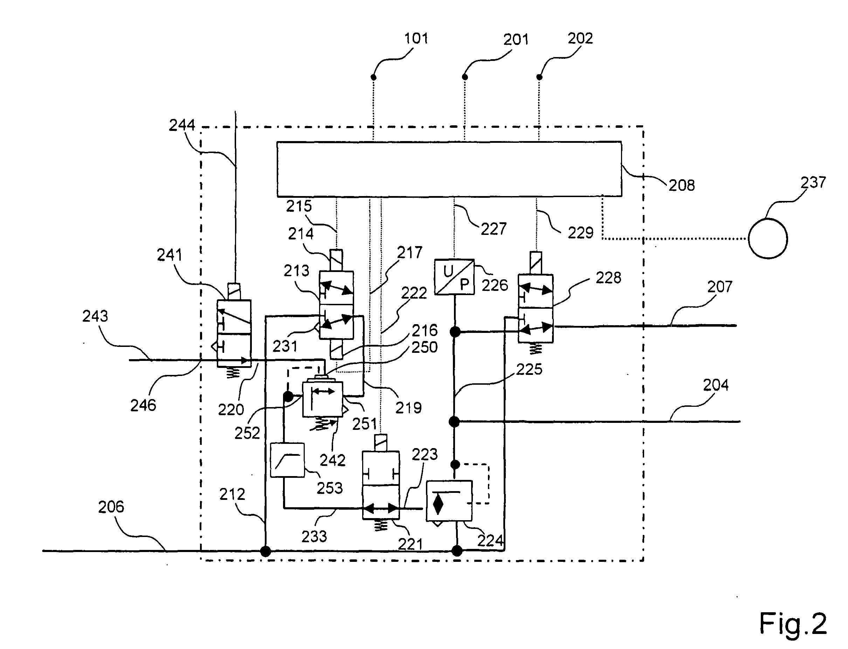

In der Fig. 2 ist der Aufbau des Feststellbrems-Moduls (2) in schematischer Form detailliert dargestellt. Das Feststellbrems-Modul (2) wird über die Druckluftleitung (206) von dem Druckluftvorratsbehälter (53) mit Druckluft versorgt. An die Druckluftleitung (206) ist über eine Druckluftleitung (212) ein Bistabil-Ventil (213) angeschlossen, das als elektromagnetisch betätigbares 3/-2-Wegeventil ausgebildet ist. Es weist eine erste Schaltstellung, nachfolgend Entlüftungsstellung genannt, auf, wie in der Fig. 2 dargestellt, in welcher ein ausgangsseitiger, mit einer Druckluftleitung (219) verbundener Anschluss mit einem mit der Atmosphäre verbundenen Entlüftungsanschluss (231) verbunden ist. In einer zweiten Schaltstellung, nachfolgend Druckzufuhrstellung genannt, verbindet das Bistabil-Ventil (213) die Druckluftleitung (212) mit der Druckluftleitung (219) .

Der prinzipielle Aufbau derartiger Bistabil-Ventile ist beispielsweise aus der WO 00/23740 A1 bekannt.

Das Bistabil-Ventil (213) hat die besondere Eigenschaft, im unbestromten Fall, d. h. wenn keine elektrische Spannung anliegt, keine bevorzugte Schaltstellung aufzuweisen, wie etwa bekannte, mit einer Rückstellfeder versehene Magnetventile, welche bei unbestromtem Elektromagneten durch die Kraft der Rückstellfeder in eine vorgewählte Schaltstellung gebracht werden. Bei der in der Fig. 2 dargestellten Ausführungsform des Bistabil-Ventils (213) ist ein erster Elektromagnet (214) vorgesehen, durch dessen Betätigung das Bistabil-Ventil (213) in seine zweite Schaltstellung gebracht werden kann. Weiterhin ist ein zweiter Elektromagnet (216) vorgesehen, durch den das Bistabil-Ventil (213) in seine erste Schaltstellung gebracht werden kann. Die Elektromagneten (214, 216) werden zur Vermeidung undefinierter Zustände nicht gleichzeitig betätigt. Die Elektromagneten (214, 216) sind über elektrische Leitungen (215, 217) mit einer elektronischen Steuereinrichtung (208) verbunden. In einer weiteren Ausführungsform weist das Bistabil-Ventil zur Betätigung lediglich einen Elektromagneten auf, wobei die Umschaltung zwischen den beiden Schaltstellungen dann durch Umpolung der elektrischen Spannung an dem Elektromagneten seitens der elektronischen Steuereinrichtung (208) erfolgt.

Ausgangsseitig des Bistabil-Ventils (213) ist an die Druckluftleitung (219) ein Druckeinlass (251) eines als Relaisventil ausgebildeten Invertierungsventils (242) angeschlossen. Das Invertierungsventil (242) weist außerdem einen Drucksteuereingang (250) auf, welcher über eine Druckluftleitung (220) mit einem Redundanz-Rückhalteventil (241) verbunden ist. Weiterhin weist das Invertierungsventil (242) einen Druckauslass (252) auf, welcher über eine Druckluftleitung (233) an ein Ventil (221) angeschlossen ist.

Das Redundanz-Rückhalteventil (241) ist über eine elektrische Leitung (244) mit dem Hinterachs-Bremssteuermodul (5) verbunden. Das Redundanz-Rückhalteventil (241) ist als 3/2-Wege-Magnetventil ausgebildet, welches an einem Druckluft-Eingangsanschluss mit der Druckluftleitung (243) verbunden ist und über diese Druckluftleitung das Drucksignal des Bremsventils (260) empfängt. In einer ersten, in der Fig. 2 dargestellten Schaltstellung, welche nur im Redundanzfall eingenommen wird, ist das von dem Bremsventil (260) abgegebene Drucksignal über die Druckluftleitung (243) mit der Druckluftleitung (220) verbunden und wirkt somit direkt auf den Drucksteuereingang (250) des Invertierungsventils (242). In der zweiten Schaltstellung des Redundanz-Rückhalteventils (241) ist die Druckluftleitung (243) abgesperrt, und die Druckluftleitung (220) wird mit einem mit der Atmosphäre verbundenen Anschluss des Ventils (241) verbunden. Hierdurch ist der Drucksteuereingang (250) des Invertierungsventils (242) entlüftet, was zur Folge hat, dass das Invertierungsventil (242) den am Druckeinlass (251) von der Druckluftleitung (219) anstehenden Druck unverändert an dem Druckauslass (252) in die Druckluftleitung (233) abgibt. Diese zweite Schaltstellung wird im störungsfreien Normalbetrieb der Bremsanlage permanent eingestellt.

Das Invertierungsventil (242) hat bezüglich der Druckverhältnisse an dem Druckauslass (252) und dem Drucksteuereingang (250) eine invertierende Kennlinie. Mit anderen Worten, bei einem geringen am Drucksteuereingang (250) vorliegenden Druck wird über das Invertierungsventil (242) am Druckauslass (252) ein hoher Druck ausgegeben. Umgekehrt wird bei hohem am Drucksteuereingang (250) vorliegenden Druck ein geringer Druck am Druckauslass (252) ausgegeben. Der am Druckauslass (252) ausgegebene Druck wird über die am Druckeinlass (251) vorliegende Druckluft erzeugt. Diese wird dem Invertierungsventil, wie schon erläutert, über die Druckluftleitung (219), das Bistabil-Ventil (213), die Druckluftleitung (212) sowie die Druckluftleitung (206) von dem Druckluftvorratsbehälter (53) zugeführt. Hierfür ist das Bistabil-Ventil (213) durch Betätigung des Elektromagneten (214) von der elektronischen Steuereinrichtung (208) in die Druckzufuhrstellung gestellt.

Das Ventil (221) ist über eine mit der elektronischen Steuereinrichtung (208) verbundene elektrische Leitung (222) elektromagnetisch betätigbar. Das Ventil (221) erlaubt in seiner in der Fig. 2 dargestellten Schaltstellung ein Durchströmen von Druckluft zwischen der Druckluftleitung (220) und einer ausgangsseitigen Druckluftleitung (223) in beiden Strömungsrichtungen.

In der zweiten Schaltstellung sperrt das Ventil (221) die Druckluftströmung ab. Zur Erzielung eines dosierten Durchströmens von Druckluft kann das Ventil (221) z. B. mit einem getakteten Signal von der elektronischen Steuereinrichtung (208) angesteuert werden.

Gemäß einer vorteilhaften Weiterbildung der Erfindung ist das Ventil (221) als Proportionalventil ausgebildet, d.h. es sind durch Ansteuerung des Elektromagneten mit geeigneten elektrischen Signalen, z. B. mit einem getakteten Signal, proportionale oder zumindest quasiproportionale Durchlassquerschnitte zwischen den Extremwerten Durchlaßstellung und Absperrstellung einstellbar. Das Proportionalventil (221) dient einer besonders fein dosierten Be- und Entlüftung eines über die Druckluftleitung (223) nachgeschalteten Relaisventils (224). Das Relaisventil (224) gibt einen Ausgangsdruck in eine Druckluftleitung (225) ab, der dem über die Druckluftleitung (223) in eine Steuerkammer des Relaisventils (224) eingesteuerten Druck entspricht, wobei das Relaisventil (224) die hierfür benötigte Druckluft aus einer mit der Druckluft-Zufuhrleitung (206) verbundenen Druckluftleitung entnimmt.

Mit der ausgangsseitig des Relaisventils (224) angeordneten Druckluftleitung (225) ist ein optionaler Drucksensor (226) verbunden, welcher ein dem Druck in der Druckluftleitung (225) entsprechendes elektrisches Signal über eine elektrische Leitung (227) an die elektronische Steuereinrichtung (208) abgibt und dort als Istdruckwert ausgewertet wird.

Die Druckluftleitung (225) ist mit der zu den Bremszylindern (31, 41) führenden Druckluftleitung (204) verbunden. Des weiteren ist die Druckluftleitung (225) mit einem 3/2-Wegeventil (228) verbunden.

Das 3/2-Wegeventil (228) dient als Anhängerkontrollventil, d. h. mittels dieses Ventils kann eine sogenannte Anhängerkontroll-Funktion aktiviert werden. Als Anhängerkontroll-Funktion wird ein Zustand der Bremsanlage bezeichnet, bei dem bei an sich eingelegter Feststellbrems-Funktion die Bremsen eines mit dem Zugfahrzeug verbundenen Anhängefahrzeuges gelöst werden, um dem Fahrer des Zugfahrzeuges eine Möglichkeit zu geben, zu überprüfen, ob bei abgestelltem Fahrzeugzug die Bremswirkung der Feststellbremse des Zugfahrzeugs alleine ausreicht, um den gesamten Fahrzeugzug am Wegrollen zu hindern. Eine derartige Überprüfung ist insbesondere bei Anhängefahrzeugen erforderlich, bei denen etwa infolge von schleichendem Druckverlust bei längerfristigem Abstellen des Fahrzeugzuges sich die Bremsen des Anhängefahrzeugs lösen könnten. Auch in diesem Fall muss sichergestellt sein, dass der Fahrzeugzug nicht wegrollt, was demzufolge von der Feststellbremse des Zugfahrzeugs bewirkt werden muss.

Das Anhängerkontrollventil (228) ist als elektromagnetisch betätigbares 3/2-Wegeventil ausgeführt, das zur Betätigung über eine elektrische Leitung (229) mit der elektronischen Steuereinrichtung (208) verbunden ist. In einer ersten, in der Fig. 2 dargestellten Schaltstellung verbindet das Anhängerkontrollventil (228) die zu dem Anhängersteuerventil (6) führende Druckluftleitung (207) mit der Druckluftleitung (225). In seiner zweiten Schaltstellung verbindet das Anhängerkontrollventil (228) die Druckluftleitung (207) mit der Druckluft-Zufuhrleitung (206) und damit mit dem Druckluftvorrat. In dieser zweiten Schaltstellung ist die Anhängerkontroll-Funktion aktiviert. Hierbei wird der mit der Druckluftleitung (207) verbundene Drucksteuereingang des Anhängersteuerventils (6) mit Vorratsdruck beaufschlagt, was aufgrund einer invertierenden Funktion des Anhängersteuerventils (6) ein Lösen der Bremsen des Anhängefahrzeuges bewirkt.

In einer vorteilhaften Ausgestaltung der Erfindung beinhaltet das Feststellbrems-Modul (2) eine Feststellbrems-Ventileinrichtung, in welche die Ventile (213, 221, 224, 228, 241, 242, 253) baulich integriert sind.

Die Feststellbrems-Ventileinrichtung weist einen Druckluft-Eingangsanschluss (246) für das Drucksignal des Bremsventils (260) auf.

Die zuvor beschriebene Bremsanlage weist gemäß vorteilhaften Ausgestaltungen der Erfindung die nachfolgend erläuterten Funktionen auf.

Die elektronische Steuereinrichtung (208) empfängt die Signale von dem Feststellbrems-Signalgeber (1) und wertet diese aus. Hierbei unterscheidet die elektronische Steuereinrichtung (208) zwischen den Betätigungszuständen Neutralstellung, Feststellbrems-Stellung und Anhängerkontroll-Stellung.

Bei der Steuerung der Feststellbrems-Funktion unterscheidet die elektronische Steuereinrichtung (208) zudem zwischen zwei Betriebszuständen des Fahrzeuges, nämlich fahrendem Fahrzeug und stehendem Fahrzeug. Zur Ermittlung des jeweils vorliegenden Betriebszustandes empfängt die elektronische Steuereinrichtung (208) die Geschwindigkeitssignale über den Fahrzeugbus von den Modulen (3, 5) und wertet diese aus. Das Fahrzeug wird dann als stehendes Fahrzeug betrachtet, wenn die Geschwindigkeitssignale, die über die Rad-Sensoren (13, 23, 33, 43) ermittelt werden, eine Geschwindigkeit von Null oder zumindest in der Nähe von Null anzeigen. Andernfalls wird das Fahrzeug als fahrendes Fahrzeug betrachtet.

Wenn bei dem Feststellbrems-Signalgeber (1) eine Betätigung in Richtung Feststellbrems-Stellung detektiert wird, so prüft die elektronische Steuereinrichtung (208) zunächst, welcher Betätigungszustand der Feststellbrems-Funktion bis dahin vorgelegen hat, d. h. ob die Feststellbrems-Funktion bereits aktiviert ist oder nicht aktiviert ist. Bei bereits aktivierter Feststellbrems-Funktion bewirkt die elektronische Steuereinrichtung (208) dann eine Deaktivierung der Feststellbrems-Funktion, anderenfalls eine Aktivierung der Feststellbrems-Funktion. Es wird also in den jeweils anderen Betätigungszustand gewechselt.

So dann prüft die elektronische Steuereinrichtung (208), ob sich das Fahrzeug im stehenden oder fahrenden Betriebszustand befindet. Im Falle der Aktivierung der Feststellbrems-Funktion bei fahrendem Fahrzeug sendet die elektronische Steuereinrichtung (208) über die Datenschnittstelle ein Bremsanforderungssignal an die Module (3, 5). In einer vorteilhaften Ausgestaltung enthält das Bremsanforderungssignal einen Sollwert für die Fahrzeugverzögerung. Die Module (3, 5) empfangen das Bremsanforderungssignal und steuern daraufhin durch Druckluft-Beaufschlagung der Bremszylinder (11, 21, 31, 41) die Radbremsen nach Maßgabe des Sollwertes der Fahrzeugverzögerung an, derart, dass der Istwert der Fahrzeugverzögerung möglichst genau dem Sollwert entspricht. Die elektronische Steuereinrichtung (208) sendet dieses Bremsanforderungssignal solange aus, wie der Feststellbrems-Signalgeber (1) in der Feststellbrems-Stellung gehalten wird und das Fahrzeug sich im fahrenden Zustand befindet. Sobald der Feststellbrems-Signalgeber (1) bei fahrendem Fahrzeug nicht mehr in der Feststellbrems-Stellung gehalten wird, beendet die elektronische Steuereinrichtung (208) das Aussenden des Bremsanforderungssignals und deaktiviert die Feststellbrems-Funktion. Die Module (3, 5) beenden daraufhin den durch das Bremsanforderungssignal ausgelösten Bremseingriff.

Gemäß einer vorteilhaften Weiterbildung der Erfindung variiert die elektronische Steuereinrichtung (208) während des Zeitraumes, in dem der Feststellbrems-Signalgeber (1) bei fahrendem Fahrzeug in der Feststellbrems-Stellung gehalten wird, den Sollwert für die Fahrzeugverzögerung gemäß einer Zeitfunktion. Die Zeitfunktion beinhaltet einen kontinuierlichen Anstieg des Sollwerts von einem Minimalwert auf einen Maximalwert.

Sobald bei fahrendem Fahrzeug und aktivierter Feststellbrems-Funktion die elektronische Steuereinrichtung (208) erkennt, dass das Fahrzeug zum Stillstand kommt, bewirkt die elektronische Steuereinrichtung (208) eine Entlüftung des Federspeicherteils der Federspeicher-Bremszylinder (31, 41), wodurch die Bremswirkung der Federspeicher eintritt und damit die Feststellbremse eingelegt ist. Außerdem beendet die elektronische Steuereinrichtung (208) das Aussenden des Bremsanforderungssignals. Die Module (3, 5) beenden dann den durch das Bremsanforderungssignal ausgelösten Bremseingriff.

Gemäß einer vorteilhaften Weiterbildung der Erfindung beendet die elektronische Steuereinrichtung (208) dabei den über das Bremsanforderungssignal ausgelösten Bremseingriff nicht schlagartig, sondern sendet zunächst weiterhin das Bremsanforderungssignal aus, wobei sie die durch das Bremsanforderungssignal angeforderte Bremskraft der Betriebsbremse allmählich verringert. Gleichzeitig bewirkt die elektronische Steuereinrichtung (208) eine Entlüftung des Federspeicherteils der Federspeicher-Bremszylinder (31, 41), wodurch die Bremswirkung der Federspeicher eintritt. Dies hat den Vorteil, dass im Ergebnis immer eine annähernd gleiche Bremsbetätigungskraft an die Bremsen angelegt wird und eine Überbeanspruchung der Bremsen und der Bremsmechanik infolge einer durch Überlagerung zweier Bremsbetätigungskraft-Einflüsse erhöhten Bremsbetätigungskraft weitestgehend vermieden wird.

Gemäß einer vorteilhaften Weiterbildung der Erfindung kann zusätzlich vorgesehen sein, dass die durch das Bremsanforderungssignal angeforderte Bremskraft der Betriebsbremse dabei gerade in dem Maße verringert wird, in dem die durch die Federspeicher aufgebrachte Bremskraft zunimmt. Hierdurch wird der Übergang zwischen der Betriebsbremse und der Federspeicherbrems-Funktion noch gleichmäßiger gestaltet. Dies hat den Vorteil, dass der Bremsvorgang für den Fahrer des Fahrzeuges komfortabler und für andere Verkehrteilnehmer besser einschätzbar wird.

Bei stehendem Fahrzeug spielt die Dauer, während der Feststellbrems-Signalgeber (1) in die Feststellbrems-Stellung betätigt ist, im wesentlichen keine Rolle. In diesem Betriebszustand des Fahrzeuges bewirkt bereits eine kurze Betätigung im Sinne eines Antippens eine Aktivierung bzw. eine Deaktivierung der Feststellbrems-Funktion.

Im Falle der Aktivierung der Feststellbrems-Funktion bei stehendem Fahrzeug bewirkt die elektronische Steuereinrichtung (208) unverzüglich eine Entlüftung der Federspeicher-Bremszylinder (31, 41), wodurch die Bremswirkung der Federspeicher eintritt und damit die Feststellbremse eingelegt ist.

Im Falle einer Deaktivierung der Feststellbrems-Funktion bei stehendem Fahrzeug bewirkt die elektronische Steuereinrichtung (208) unverzüglich eine Belüftung des Federspeicherteils der Federspeicher-Bremszylinder (31, 41), wodurch die Bremswirkung der Federspeicher aufgehoben wird und damit die Feststellbremse gelöst ist.

Gemäß einer vorteilhaften Weiterbildung der Erfindung wird eine Deaktivierung der Feststellbrems-Funktion nur bei gleichzeitiger Betätigung des Bremspedals (4) zugelassen. Die elektronische Steuereinrichtung (208) empfängt hierfür ein die Betätigung des Bremspedals (4) anzeigendes Signal über die Datenschnittstelle von dem Vorderachs-Bremssteuermodul (3) und führt die mit der Deaktivierung der Feststellbrems-Funktion verbundenen Aktionen nur durch, wenn das Bremspedal (4) betätigt ist.

Neben der Aktivierung der Feststellbrems-Funktion mittels des Feststellbrems-Signalgebers (1) ist gemäß einer vorteilhaften Weiterbildung der Erfindung zusätzlich vorgesehen, dass die elektronische Steuereinrichtung (208) bei Empfang eines Aktivierungssignals über die Datenschnittstelle, d.h. über den Datenschnittstellen-Anschluss (62), die Feststellbrems-Funktion aktiviert. Dies hat den Vorteil, dass die Feststellbrems-Funktion auch von anderen in dem Fahrzeug vorgesehenen Systemen, die zum Informationsaustausch mit dem Feststellbrems-Modul (2) über den Datenbus geeignet sind, z.B. aus Sicherheitsgründen betätigt werden kann, beispielsweise von einer Diebstahlsicherungsanlage oder bei Fahrzeugen mit Kranbetrieb.

Über die Druckluftleitung (207) werden auch die Bremsen eines eventuell angekoppelten Anhängefahrzeuges im zuvor erläuterten Sinne mitbetätigt. Dies beinhaltet auch eine Ansteuerung der Bremsen bei fahrendem Fahrzeug nach Maßgabe des von der elektronischen Steuereinrichtung (208) ausgesendeten Bremsanforderungssignals. In diesem Fall wird ein dem Bremsanforderungssignal korrespondierendes elektrisches Signal von dem Modul (3) an das Anhängersteuerventil (6) abgegeben.

Bei Betätigung des Feststellbrems-Signalgebers (1) in die Anhängerkontroll-Stellung bewirkt die elektronische Steuereinrichtung (208) bei stehendem Fahrzeug und bereits aktivierter Feststellbrems-Funktion eine Betätigung des Anhängerkontrollventils (228) über die elektrische Leitung (229) in die zweite Schaltstellung. Hierdurch wird über die Druckluftleitung (207) der damit verbundene pneumatische Steueranschluss des Anhängersteuerventils (6) mit dem Vorratsdruck aus der Druckluft-Zufuhrleitung (206) beaufschlagt. Die Beaufschlagung bzw. die Betätigung des Anhängerkontrollventils (228) erfolgt so lange, wie der Feststellbrems-Signalgeber (1) in der Anhängerkontroll-Stellung gehalten wird. Die Druckbeaufschlagung des Anhängersteuerventils (6) bewirkt aufgrund der Invertierungsfunktion ein Lösen der Bremsen des Anhängefahrzeugs. Die Feststellbremse des Zugfahrzeugs bleibt dabei eingelegt. Sobald der Feststellbrems-Signalgeber (1) in die Neutralstellung zurückkehrt, schaltet die elektronische Steuereinrichtung (208) das Anhängerkontrollventil (228) wieder in die in der Fig. 2 dargestellte erste Schaltstellung. Hierdurch wird der mit der Druckluftleitung (207) verbundene Steueranschluss des Anhängerventils (6) entlüftet und die Bremsen des Anhängefahrzeugs in den vor Betätigung des Feststellbrems-Signalgebers (1) vorliegenden Betätigungszustand zurückversetzt. Die elektronische Steuereinrichtung (208) ignoriert dabei eine eventuelle Betätigung des Feststellbrems-Signalgebers (1) in die Anhängerkontroll-Stellung bei fahrendem Fahrzeug.

Wenn die Bremsanlage mit einer Rollbrems-Funktion ausgestattet ist, dann besteht für den Benutzer des Fahrzeugs die Möglichkeit, über den Rollbrems-Signalgeber (60) die Rollbrems-Funktion zu aktivieren bzw. zu deaktivieren. Eine Rollbrems-Funktion, die z. B. in den Modulen (3, 5) mittels Software implementiert sein kann, kann beispielsweise derart ausgestaltet sein, dass nach Aktivierung der Rollbrems-Funktion bei fahrendem Fahrzeug eine Überwachung darauf stattfindet, ob das Fahrzeug zum Stillstand kommt. Bei Erkennen des Fahrzeugstillstandes infolge einer Bremsbetätigung durch den Fahrer werden dann automatisch durch Betätigung der Ventile (12, 22) sowie der in dem Hinterachs-Bremssteuermodul (5) vorgesehenen Ventile die jeweils vorliegenden Bremsdrücke in sämtlichen Bremszylindern sowie in der Anhängerbremsanlage auf dem aktuell vorliegenden Niveau gehalten, ohne dass der Fahrer weiterhin das Bremspedal (4) betätigen muss. Hierdurch kann das Fahrzeug auch nach dem Lösen des Bremspedals (4) an einer geneigten Fahrbahn im Stillstand gehalten werden. Sobald erkannt wird, dass der Fahrer versucht, mit dem Fahrzeug anzufahren, werden die Radbremsen sowie die Anhängerbremsanlage automatisch gelöst.

Bei der zuvor beschriebenen Rollbrems-Funktion kann es vorkommen, dass bei Auftreten eines Defekts in der Bremsanlage, insbesondere eines elektrischen Defekts an elektrischen oder elektronischen Komponenten wie z. B. den Modulen (3, 5), der Bremsdruck in einzelnen oder allen Bremsenzylindern oder der Anhängerbremsanlage nicht gehalten werden kann. Ein möglicher Defekt ist z. B. ein Ausfall der Spannungsversorgung. In einem solchen Fall wäre das Fahrzeug vollständig ungebremst.

Gemäß einer vorteilhaften Weiterbildung der Erfindung enthält die elektronische Steuereinrichtung (208) eine Funktion zum Erkennen der Aktivierung der Rollbrems-Funktion, zum Beispiel durch Auswertung der über die Datenschnittstelle empfangenen Daten. Falls die elektronische Steuereinrichtung (208) bei aktivierter Rollbrems-Funktion zusätzlich das Auftreten eines Defekts in der Bremsanlage wahrnimmt, aktiviert die elektronische Steuereinrichtung (208) die Feststellbrems-Funktion. Hierdurch kann ein Wegrollen des Fahrzeuges auch bei von dem Fahrer per Zündungsschalter ausgeschalteter Spannungsversorgung oder bei einem der zuvor erwähnten Defekte sicher unterbunden werden. Ein weiterer Vorteil besteht darin, eine bei bekannten Lösungen erforderliche permanente Betätigung wenigstens eines der Fahrzeugpedale zum Zwecke der Aufrechterhaltung der Rollbrems-Funktion hier nicht notwendig ist. Der Fahrer des Fahrzeuges wird dadurch von unnötigen Belastungen befreit.

Gemäß einer vorteilhaften Weiterbildung der Erfindung aktiviert die elektronische Steuereinrichtung (208) bei erkannter Aktivierung der Rollbrems-Funktion immer die Feststellbrems-Funktion, d.h. auch wenn kein Defekt in der Bremsanlage vorliegt.

Bei Deaktivierung der Rollbrems-Funktion durch Betätigung des Rollbrems-Signalgebers (60) oder bei Erkennung des Anfahrens des Fahrzeugs deaktiviert die elektronische Steuereinrichtung (208) zugleich die Feststellbrems-Funktion.

Gemäß einer vorteilhaften Weiterbildung der Erfindung aktiviert die elektronische Steuereinrichtung (208) bei erkannter Aktivierung der Rollbrems-Funktion nicht pauschal die Feststellbrems-Funktion, sondern schaltet das Ventil (221) in die Absperrstellung und das Bistabil-Ventil (213) in die in der Fig. 2 dargestellte Entlüftungsstellung. Hierdurch wird, solange kein Defekt in der Bremsanlage vorliegt, zunächst nichts an der Rollbrems-Funktion und deren Auswirkungen geändert. Sobald jedoch ein Defekt auftritt, der beispielsweise auch von der elektronischen Steuereinrichtung (208) durch Empfang eines Defekt-Informationssignals von einem der Module (3, 5) über die Datenschnittstelle erkannt werden kann, schaltet die elektronische Steuereinrichtung (208) das Ventil (221) in die Durchlaßstellung. Hierdurch werden die Federspeicher-Bremszylinder (31, 41) entlüftet, so dass die Bremswirkung der Federspeicher eintritt. Zusätzlich wird über die Druckluftleitung (207) die Bremsanlage des Anhängefahrzeuges vollständig betätigt.

Wenn der Defekt darin besteht, dass die Spannungsversorgung für das Feststellbrems-Modul (2) und ggf. andere Teile der Bremsanlage ausfällt, dann erfolgt ebenfalls eine durch Federkraft bewirkte automatische Rückstellung des Ventils (221) in die Durchlaßstellung. Das Bistabil-Ventil (213) hat ohnehin die Eigenschaft, bei fehlender elektrischer Betätigung seine Schaltstellung beizubehalten, so dass auch in diesem Fall die Federspeicher-Bremszylinder (31, 41) sowie die Druckluftleitung (207) entlüftet werden, so dass die Bremswirkung der Federspeicher eintritt und die Bremsanlage des Anhängefahrzeuges betätigt wird.

Diese Weiterbildung der Erfindung hat den Vorteil, dass zunächst der ohnehin in den Bremszylindern vorhandene Druck zum Bremsen weiter benutzt wird. Somit wird keine zusätzliche Druckluft verbraucht. Nur im Fehlerfall erfolgt eine mit Luftverbrauch verbundene Umschaltung auf die Bremswirkung der Federspeicher.

Gemäß einer vorteilhaften Weiterbildung der Erfindung beinhaltet die elektronische Steuereinrichtung (208) einen Modus zum einstellbaren Betätigen der Feststellbremse, d. h. zur Einstellung einer bestimmten von der Feststellbremse aufzubringenden Bremskraft. Hierbei steuert die elektronische Steuereinrichtung (208) gemäß einem Bremsanforderungssignal, welches einen z. B. Bremsdruck-Sollwert beinhaltet, die Ventile (213, 221) derart an, dass der sich in der Druckluftleitung (225) einstellende Bremsdruck wenigstens annähernd dem Bremsdruck-Sollwert entspricht. Die elektrische Steuereinrichtung (208) überprüft dabei mittels des Drucksensors (226) den sich in der Druckluftleitung (225) einstellenden Druck und regelt gegebenenfalls durch Betätigung der Ventile (213, 221) den Druck nach. Statt des Bremsdruck-Sollwerts kann das Bremsanforderungssignal auch beispielsweise eine Fahrzeug-Sollverzögerung enthalten. In einem solchen Fall regelt die elektronische Steuereinrichtung (208) den in der Druckluftleitung (225) einzustellenden Druck gemäß einer Istverzögerung, die die elektronische Steuereinrichtung (208) aufgrund von über die Datenschnittstelle empfangenen Geschwindigkeitssignalen der Rad-Sensoren (13, 23, 33, 43) berechnet.

Das Bremsanforderungssignal kann die elektronische Steuereinrichtung (208) beispielsweise über die Datenschnittstelle von einem der Module (3, 5) empfangen. Dieser Modus wird auch als automatische Hilfsbremsung bezeichnet. Die automatische Hilfsbremsung wird von einem der Module (3, 5) durch Aussenden bestimmter Bremsanforderungssignale an die elektronische Steuereinrichtung (208) über den Datenbus eingesetzt, wenn an wenigstens einer mit einem Federspeicher-Bremszylinder bestückten Radbremse der Betriebsbremskreis ausfällt. In diesem Fall kann über die Federspeicher-Bremsfunktion solcher Bremszylinder noch eine Bremswirkung erzielt werden.

Des weiteren sendet die elektronische Steuereinrichtung (208) über die Datenschnittstelle das berechnete Bremsanforderungssignal beispielsweise an die Module (3, 5). In einer vorteilhaften Ausgestaltung der Erfindung weisen die Module (3, 5) eine Funktion auf, nach der sie bei einem Defekt an dem mit dem Bremspedal (4) verbundenen Bremswertgeber dieses von der elektronischen Steuereinrichtung (208) empfangbare Bremsanforderungssignal für die Abbremsung des Fahrzeuges verwenden, d.h. für die Bestimmung und Einstellung einer Bremskraft. Hierdurch hat der Fahrer des Fahrzeuges auch im Fall eines Defektes an dem Bremswertgeber eine Möglichkeit zur abstufbaren Bremsung des Fahrzeuges, wodurch die Betriebssicherheit der Bremsanlage und des Fahrzeuges erhöht wird.

Gemäß einer vorteilhaften Weiterbildung der Erfindung ist die elektronische Steuereinrichtung (208) mit einem elektrisch betätigbaren Anzeigeelement (237) verbunden. Das Anzeigeelement (237) dient zur optischen Anzeige des Betätigungszustands der Feststellbremse und ist in diesem Zusammenhang vorzugsweise im Sichtbereich des Bedieners des Fahrzeuges angeordnet. Das Anzeigeelement (237) ist geeignet zur Anzeige von zwei Zuständen, z. B. Feststellbrems-Funktion aktiviert und deaktiviert. Hierfür weist das Anzeigeelement (237) eine bistabile Schaltfunktion auf, welche den zuletzt eingestellten Anzeigezustand auch nach Abschalten einer Versorgungsspannung beibehält. Das Anzeigeelement (237) ist vorzugsweise durch relativ kurze elektrische Impulse von der elektronischen Steuereinrichtung (208) betätigbar.

Gemäß einer vorteilhaften Ausgestaltung der Erfindung weist die elektronische Steuereinrichtung (208) eine Betriebsart auf, bei der die elektronische Steuereinrichtung (208) die Feststellbrems-Funktion immer dann automatisch, d. h. ohne Betätigung des Feststellbrems-Signalgebers (1), aktiviert, wenn bei stehendem Fahrzeug der Motor abgestellt wird, z. B. durch Ausschalten der Zündung. Diese Betriebsart kann per Voreinstellung z. B. von dem Herstellers des Fahrzeuges für bestimmte Arten von Fahrzeugen ausgewählt werden und kann dann von einem Benutzer des Fahrzeugen nicht mehr generell deaktiviert werden. Bei einer Auswahl dieser Betriebsart kann es in Einzelfällen jedoch erforderlich sein, z. B. um ein defektes Fahrzeug abzuschleppen, dass die automatische Aktivierung der Feststellbrems-Funktion unterbunden werden soll. Zu diesem Zweck prüft die elektronische Steuereinrichtung (208) vor der automatischen Aktivierung der Feststellbrems-Funktion, ob der Feststellbrems-Signalgeber (1) manuell in die Anhängerkontroll-Stellung gestellt ist und beim Abstellen des Motors in dieser Stellung gehalten wird. Wird ein solcher Fall erkannt, so bewirkt die elektronische Steuereinrichtung (208) keine automatische Aktivierung der Feststellbrems-Funktion.

Sofern nun der bereits erläuterte Redundanzfall eintritt, z. B. infolge eines Totalausfalls der elektrischen Energieversorgung, nimmt das Redundanz-Rückhalteventil (241) mangels elektrischer Betätigung über eine Rückstellfeder die in der Fig. 2 dargestellte Durchlassstellung an, über die der Drucksteuereingang (250) des Invertierungsventils (242) mit dem über die Druckluftleitung (243) zugeführten Drucksignal von dem Bremsventil (260) verbunden ist. Zugleich ist über das in die Druckluftzufuhrstellung geschaltete Bistabil-Ventil (213) der Druckeinlass (251) des Invertierungsventils (242) über die Druckluftleitungen (219, 212, 206) mit dem Druckluftvorratsbehälter (53) verbunden.

Das Ventil (221) ist mangels elektrischer Betätigung ebenfalls in die in der Fig. 2 dargestellte Durchlassstellung geschaltet. In diesem Betriebszustand ist mittels einer Betätigung des Bremspedals (4) das Fahrzeug über pneumatische Steuerung des Federspeicherteils der Federspeicher-Bremszylinder (31, 41) weiterhin abstufbar abbremsbar. Hierbei wird das von dem in dem Bremswertgeber (240) enthaltenen Bremsventil (260) abgegebene Drucksignal auf den Drucksteuereingang (250) des Invertierungsventils (242) gegeben. Das Invertierungsventil (242) gibt ein diesem Drucksignal entgegengesetztes Drucksignal auf dem Druckauslass (252) aus. Das ausgegebene Drucksignal wird dem Steuereingang des Relaisventils (224) zugeführt, welches einen diesem Druck entsprechenden Druck auf seiner Ausgangsseite in die Druckluftleitung (225) und von dort aus über die Druckluftleitung (204) in die Federspeicherteile der Federspeicher-Bremszylinder (31, 41) abgibt.

Gemäß einer vorteilhaften Ausgestaltung der Erfindung kann statt des Invertierungsventils (242) auch in dem Bremswertgeber (240) direkt ein Bremsventil (260) mit invertierender Drucksignal-Charakteristik verwendet werden, d. h. ein Bremsventil, das einen hohen Ausgangsdruck abgibt, wenn das Bremspedal (4) nicht betätigt ist, und einen geringen Ausgangsdruck, wenn das Bremspedal (4) voll betätigt ist. In diesem Fall kann das Invertierungsventil (242) eingespart werden.

Gemäß einer vorteilhaften Ausgestaltung der Erfindung ist auf der Druckauslass-Seite (252) des Invertierungsventils (242) ein Druckbegrenzungsventil (253) vorgesehen. Das Druckbegrenzungsventil (253) begrenzt den an das Ventil (221) weitergegebenen Druck und somit auch den an die Federspeicher-Bremszylinder (31, 41) abgegebenen Druck auf einen vorgegebenen, einstellbaren Grenzwert. Da zum Lösen der Federspeicherfunktion handelsüblicher Federspeicher-Bremszylinder nicht ein Druck in Höhe des maximal in der Bremsanlage verfügbaren Drucks erforderlich ist, sondern lediglich ein geringerer Druck, ist es demzufolge auch nicht erforderlich, die Federspeicher-Bremszylinder zum Lösen der Federspeicherfunktion mit dem maximal verfügbaren Druck zu beaufschlagen. Die Verwendung des Druckbegrenzungsventils (253) hat im Redundanzfall den Vorteil, dass bei unbetätigtem Bremspedal (4), bei welchem ohne Verwendung des Druckbegrenzungsventils (253) von dem Invertierungsventil (242) der maximale Vorratsdruck ausgegeben werden würde, dieser mit dem Druckbegrenzungsventil (253) auf den vorgegebenen Grenzwert begrenzt wird. Der Grenzwert ist vorteilhaft so bemessen, dass dabei gerade die Federspeicherfunktion gelöst wird. Bei einem anschließenden Betätigen des Bremspedals kann hierdurch schneller ein Ansprechen der Bremswirkung durch Druckabbau in den Federspeicher-Bremszylindern erzielt werden. Somit ist ein feinfühligeres und schnelleres Betätigen der Bremse auch im Redundanzfall gewährleistet.

## Patentansprüche

1. Elektrisch gesteuerte pneumatische Bremsanlage für ein Fahrzeug, bei dem druckluftbetätigbare Bremszylinder (11, 21, 31, 41) zur Betätigung von Radbremsen vorgesehen sind, wobei wenigstens ein Bremszylinder als Federspeicher-Bremszylinder (31, 41) ausgebildet ist, und mit wenigstens einem elektrisch steuerbaren Bremskreis sowie wenigstens einem als Redundanz vorgesehenen pneumatisch steuerbaren Bremskreis, **dadurch gekennzeichnet, dass** im Redundanzfall mittels pneumatischer Steuerung des Federspeicherteils des Federspeicher-Bremszylinders (31, 41) das Fahrzeug durch Betätigung eines Bremspedals (4) abstufbar abbremsbar ist.

2. Bremsanlage nach Anspruch 1, **dadurch gekennzeichnet, dass** eine zur Ansteuerung einer Feststellbrems-Funktion vorgesehene Feststellbrems-Ventileinrichtung (213, 221, 224, 228, 241, 242, 253) vorgesehen ist, mittels der der Federspeicherteil des Federspeicher-Bremszylinders (31, 41) pneumatisch steuerbar ist.

3. Bremsanlage nach Anspruch 2, **dadurch gekennzeichnet, dass** die Feststellbrems-Ventileinrichtung (213, 221, 224, 228, 241, 242, 253) einen Druckluft-Eingangsanschluss (246) für ein Drucksignal eines mit dem Bremspedal (4) mechanisch verbundenen Bremsventils (260) aufweist.

4. Bremsanlage nach wenigstens einem der vorhergehenden Ansprüche, **dadurch gekennzeichnet, daß** für die pneumatische Steuerung des Federspeicherteils des Federspeicher-Bremszylinders (31, 41) ein mit einem Bremspedal (4) mechanisch verbundenes Bremsventil (260) mit invertierender Druck-Übertragungsfunktion verwendet wird.

5. Bremsanlage nach wenigstens einem der Ansprüche 1 bis 3, **dadurch gekennzeichnet, daß** für die pneumatische Steuerung des Federspeicherteils des Federspeicher-Bremszylinders (31, 41) ein mit einem Bremspedal (4) mechanisch verbundenes Bremsventil (260) mit herkömmlicher nichtinvertierender Druck-Übertragungsfunktion verwendet wird, und daß in dem Druckluftpfad zwischen dem Bremsventil (260) und dem Federspeicher-Bremszylinder (31, 41) ein Invertierungsventil (242) mit invertierender Druck-Übertragungsfunktion angeordnet ist.

6. Bremsanlage nach Anspruch 5, **dadurch gekennzeichnet, dass** das Invertierungsventil (242) als Relaisventil mit einem Druckeinlass (251), einem Druckauslass (252) und einem Drucksteuereingang (250) ausgebildet ist, wobei der Druckeinlass (251) mit einem Druckmittelvorratsbehälter (53) verbindbar ist, der Druckauslass (252) mit dem Federspeicherteil des Federspeicher-Bremszylinders (31, 41) verbindbar ist und der Drucksteuereingang (250) mit dem Bremsventil (260) verbindbar ist.

7. Bremsanlage nach wenigstens einem der Ansprüche 5 oder 6, **dadurch gekennzeichnet, daß** ein Druckbegrenzungsventil (253) zur Begrenzung des von dem Invertierungsventil (242) abgegebenen Drucks vorgesehen ist.

8. Bremsanlage nach Anspruch 7, **dadurch gekennzeichnet, dass** das Druckbegrenzungsventil (253) in das Invertierungsventil (242) baulich integriert ist.

9. Bremsanlage nach wenigstens einem der Ansprüche 5 bis 8, **dadurch gekennzeichnet, daß** das Invertierungsventil (242) in die Feststellbrems-Ventileinrichtung (213, 221, 224, 228, 241, 242, 253) baulich integriert ist.

10. Bremsanlage nach wenigstens einem der Ansprüche 3 bis 9, **dadurch gekennzeichnet, dass** ein elektrisch betätigbares Redundanz-Rückhalteventil (241) vorgesehen ist, welches nur in dem Redundanzfall das von dem Bremsventil (260) abgegebene Drucksignal zwecks abstufbarer Abbremsung auf den Federspeicherteil des Federspeicher-Bremszylinders (31, 41) einwirken lässt.

11. Bremsanlage nach Anspruch 9, **dadurch gekennzeichnet, dass** das Redundanz-Rückhalteventil (241) in die Feststellbrems-Ventileinrichtung (213, 221, 224, 228, 241, 242, 253) baulich integriert ist.

12. Bremsanlage nach wenigstens einem der vorhergehenden Ansprüche, **dadurch gekennzeichnet, daß** ein elektropneumatisches Feststellbrems-Modul (2) zur Steuerung der Feststellbrems-Funktion vorgesehen ist, wobei die Feststellbrems-Ventileinrichtung (213, 221, 224, 228, 241, 242, 253) oder Teile davon in das Feststellbrems-Modul (2) integriert sind.

13. Bremsanlage nach wenigstens einem der Ansprüche 3 bis 12, **dadurch gekennzeichnet, daß** das Bremsventil (260) Bestandteil eines einen elektrischen und einen pneumatischen Teil aufweisenden Bremswertgebers (240) ist.

## Claims

1. An electrically controlled pneumatic braking system for a vehicle, in which compressed air-operable brake cylinders (11, 21, 31, 41) for operation of wheel brakes are provided, at least one brake cylinder being in the form of a spring-loaded brake cylinder (31, 41), and having at least one electrically controllable brake circuit as well as at least one pneumatic controllable brake circuit provided as redundancy, **characterised in that** in case of redundancy, by means of pneumatic control of the stored energy part of the spring-loaded brake cylinder (31, 41) the vehicle is brakable by degrees by operation of a brake pedal (4).

2. A braking system according to claim 1, **characterised in that** a hand brake valve arrangement (213, 221, 224, 228, 241, 242, 253) intended for activating a hand brake function is provided, by means of which the stored energy part of the spring-loaded brake cylinder (31, 41) is pneumatically controllable.

3. A braking system according to claim 2, **characterised in that** the hand brake valve arrangement (213, 221, 224, 228, 241, 242, 253) comprises a compressed air input connection (246) for a pressure signal of a brake valve (260) mechanically connected to the brake pedal (4).

4. A braking system according to at least one of the preceding claims, **characterised in that** a brake valve (260) with inverting pressure-transfer function mechanically connected to a brake pedal (4) is used for the pneumatic control of the stored energy part of the spring-loaded brake cylinder (31, 41).

5. A braking system according to at least one of claims 1 to 3, **characterised in that** a brake valve (260) with conventional non-inverting pressure-transfer function mechanically connected to a brake pedal (4) is used for the pneumatic control of the stored energy part of the spring-loaded brake cylinder (31, 41), and **in that** an inverting valve (242) with inverting pressure-transfer function is arranged in the compressed air path between the brake valve (260) and the spring-loaded brake cylinder (31, 41).

6. A braking system according to claim 5, **characterised in that** the inverting valve (242) is in the form of a relay valve with a pressure inlet (251), a pressure outlet (252) and a pressure control input (250), the pressure inlet (251) being arranged to be connected to a pressure medium supply tank (53), the pressure outlet (252) being arranged to be connected to the stored energy part of the spring-loaded brake cylinder (31, 41) and the pressure control input (250) being arranged to be connected to the brake valve (260).

7. A braking system according to at least one of claims 5 and 6, **characterised in that** a pressure-limiting valve (253) for limiting the pressure output by the inverting valve (242) is provided.

8. A braking system according to claim 7, **characterised in that** the pressure-limiting valve (253) is structurally integrated in the inverting valve (242).

9. A braking system according to at least one of claims 5 to 8, **characterised in that** the inverting valve (242) is structurally integrated in the hand brake valve arrangement (213, 221, 224, 228, 241, 242, 253).

10. A braking system according to at least one of claims 3 to 9, **characterised in that** an electrically operable redundancy hold-back valve (241) is provided, which allows the pressure signal emitted by the brake valve (260) for the purpose of graduated braking to act on the stored energy part of the spring-loaded brake cylinder (31, 41) only in the case of redundancy.

11. A braking system according to claim 9, **characterised in that** the redundancy hold-back valve (241) is structurally integrated in the hand brake valve arrangement (213, 221, 224, 228, 241, 242, 253).

12. A braking system according to at least one of the preceding claims, **characterised in that** an electro-pneumatic hand brake module (2) is provided for control of the hand brake function, the hand brake valve arrangement (213, 221, 224, 228, 241, 242, 253) or parts thereof being integrated in the hand brake module (2).

13. A braking system according to at least one of claims 3 to 12, **characterised in that** the brake valve (260) is a component of a brake value transducer (240) comprising an electrical and a pneumatic part.

## Revendications

1. Système de freinage pneumatique à commande électrique pour un véhicule, dans lequel des cylindres de frein pouvant être actionnés pneumatiquement (11, 21, 31, 41) sont prévus pour actionner les freins de roue, dans lequel au moins un cylindre de frein est réalisé sous la forme d'un cylindre de frein à accumulateur à ressort (31, 41), et comportant au moins un circuit de freinage pouvant être commandé électriquement ainsi qu'au moins un circuit de freinage pouvant être commandé pneumatiquement prévu en tant que redondance, **caractérisé en ce que**, dans un cas de redondance, le véhicule peut être freiné graduellement par actionnement de la pédale de frein (4) au moyen de la commande pneumatique de la partie d'accumulateur du cylindre de frein à accumulateur à ressort (31, 41).

2. Système de freinage selon la revendication 1, **caractérisé en ce qu'**un dispositif de soupape de frein de stationnement (213, 221, 224, 228, 241, 242, 253) prévu pour commander une fonction de frein de stationnement est prévu, grâce auquel la partie d'accumulateur du cylindre de frein à accumulateur à ressort (31, 41) peut être commandée pneumatiquement.

3. Système de freinage selon la revendication 2, **caractérisé en ce que** le dispositif de soupape de frein de stationnement (213, 221, 224, 228, 241, 242, 253) présente un raccord d'entrée d'air comprimé (246) pour un signal de pression d'un robinet de frein (260) relié mécaniquement à la pédale de frein (4).

4. Système de freinage selon au moins une des revendications précédentes, **caractérisé en ce que**, pour la commande pneumatique de la partie d'accumulateur du cylindre de frein à accumulateur à ressort (31, 41), un robinet de frein (260) relié mécaniquement à la pédale de frein (4) est utilisé avec une fonction de transmission de pression inverseuse.

5. Système de freinage selon au moins une des revendications 1 à 3, **caractérisé en ce que**, pour la commande pneumatique de la partie d'accumulateur du cylindre de frein à accumulateur à ressort (31, 41), un robinet de frein (260) relié mécaniquement à la pédale de frein (4) est utilisé avec une fonction de transmission de pression non inverseuse courante, et **en ce qu'**une soupape d'inversion (242) possédant une fonction de transmission de pression inverseuse est disposée dans le trajet d'air comprimé entre le robinet de frein (260) et le cylindre de frein à accumulateur à ressort (31, 41).

6. Système de freinage selon la revendication 5, **caractérisé en ce que** la soupape d'inversion (242) est réalisée sous la forme d'une soupape relais comportant une admission de pression (251), un échappement de pression (252) et une entrée de commande de pression (250), dans lequel l'admission de pression (251) peut être reliée à un réservoir de moyen de pression (53), l'échappement de pression (252) peut être relié à la partie d'accumulateur du cylindre de frein à accumulateur à ressort (31, 41) et l'entrée de commande de pression (250) peut être reliée à le robinet de frein (260).

7. Système de freinage selon au moins une des revendications 5 ou 6, **caractérisé en ce qu'**une soupape de limitation de pression (253) est prévue pour limiter la pression délivrée par la soupape d'inversion (242).

8. Système de freinage selon la revendication 7, **caractérisé en ce que** la soupape de limitation de pression (253) est intégrée structurellement dans la soupape d'inversion (242).

9. Système de freinage selon au moins une des revendications 5 à 8, **caractérisé en ce que** la soupape d'inversion (242) est intégrée structurellement dans le dispositif de soupape de frein de stationnement (213, 221, 224, 228, 241, 242, 253).

10. Système de freinage selon au moins une des revendications 3 à 9, **caractérisé en ce qu'**une soupape de retenue de redondance pouvant être actionnée électriquement (241) est prévue, qui laisse agir seulement dans le cas de redondance, le signal de pression délivré par le robinet de frein (260) pour freiner graduellement sur la partie d'accumulateur du cylindre de frein à accumulateur à ressort (31, 41).

11. Système de freinage selon la revendication 9, **caractérisé en ce que** la soupape de retenue de redondance (241) est intégrée structurellement dans le dispositif de soupape de frein de stationnement (213, 221, 224, 228, 241, 242, 253).

12. Système de freinage selon au moins une des revendications précédentes, **caractérisé en ce qu'**un module de frein de stationnement électropneumatique (2) est prévu pour la commande de la fonction de frein de stationnement, dans lequel le dispositif de soupape de frein de stationnement (213, 221, 224, 228, 241, 242, 253) ou des parties de celui-ci sont intégrés dans le module de frein de stationnement (2).

13. Système de freinage selon au moins une des revendications 3 à 12, **caractérisé en ce que** le robinet de frein (260) est un composant d'un transmetteur de valeur de freinage (240) électrique et présentant une partie pneumatique.
